# EUROPEAN PATENT APPLICATION

(11) **EP 4 653 914 A1**
(43) Date of publication of application: **26.11.2025**
(21) Application number: 23917669.6
(22) Date of filing: 05.12.2023
(51) Int. Cl.: G01S 7/497, G01S 7/481

(54) **OPTICAL SENSOR**

(30) Priority: 18.01.2023 JP 2023006151
(71) Applicant: DENSO CORPORATION, Kariya-city, Aichi 448-8661 (JP)
(72) Inventor: ISONO Masashi, Kariya-city, Aichi 448-8661 (JP)
(74) Representative: Kuhnen & Wacker Patent- und Rechtsanwaltsbüro PartG mbB
(86) International application number: PCT/JP2023/043368
(87) International publication number: WO 2024/154457

(57) **Abstract**

An optical sensor includes an optical unit (2) including a light emitting unit (20) that emits a projected beam (PB) in a housing unit (1) and a light receiving unit (40) that receives a reflected beam (RB) in the housing unit (1), a scanning unit (3) that scans the projected beam (PB) from the light emitting unit (20) in the housing unit (1) toward the outside and reflects the reflected beam (RB) from the outside toward the light receiving unit (40) in the housing unit (1), and a control unit that controls the optical unit (2) and the scanning unit (3). The control unit (5) is in accordance with formation of optical paths (PL, RL) by the scanning unit (3) between the reflective portion (190), which is located outside footprints of the optical paths (PL, RL) in detection control in the housing unit (1) and the optical unit (2). The monitoring control monitors the optical property of the optical unit (2) in accordance with the formation of the optical paths (PL, RL) by the scanning unit (3).

## Description

### CROSS REFERENCE TO RELATED APPLICATION

The present application is based on Japanese Patent Application No. 2023-006151 filed on January 18, 2023, and the entire disclosure of the basic application is incorporated herein by reference.

### TECHNICAL FIELD

The present disclosure relates to an optical sensor.

### BACKGROUND

Optical sensors that receive a reflected beam from a light receiving unit in response to a projected beam emitted from a light emitting unit are widely known. In Patent Literature 1, as one type of such optical sensor, an operating state of the light emitting unit and the light receiving unit is self-diagnosed based on the reflected beam while a projection point of the light beam is changed from an outside to an inside of a housing by a scanning unit.

### PRIOR ART LITERATURE

### PATENT LITERATURE

Patent Literature 1: JP2002-031685A

### SUMMARY OF THE INVENTION

However, in the optical sensor disclosed in Patent Literature 1, a fact that a light path of the reflected beam is separated by a partition wall from a light path of the projected beam, which is scanned by the scanning unit during distance detection, is an obstacle to reducing an overall size of the optical sensor. Furthermore, in the optical sensor disclosed in Patent Literature 1, when the projected beam during self-diagnosis enters the optical path of the reflected beam through a hole in the partition wall and is reflected by an inner surface of an incident window in the housing, there is concern about unwanted leakage of the projected beam from the incident window to the outside.

The object of the present disclosure is to provide a compact optical sensor that reduces unwanted beam leakage.

Hereinafter, technical means of the present disclosure for solving the issue will be described.

According to an aspect of the present disclosure, an optical sensor includes a housing unit that separates an outside from an inside. The optical sensor has an optical unit that includes a light emitting unit to emit a projected beam in the housing unit and a light receiving unit to receive a reflected beam in the housing unit. A scanning unit is used to scan the projected beam emitted by the light emitting unit toward the outside within the housing unit and to reflect the reflected beam from the outside toward the light receiving unit within the housing unit. A control unit controls the optical unit and the scanning unit. The housing unit has a reflective portion with a reflective property for the projected beam. The control unit controls the scanning unit to perform detection control. This control forms optical paths in the housing unit where footprints of the projected beam and the reflected beam overlap, between the optical unit and the outside, to detect the outside. Additionally, the control unit performs monitoring control. This control forms optical paths between the optical unit and the reflective portion, which is located within the housing unit and outside the footprints of the optical paths in the detection control, to monitor an optical property of the optical unit.

According to one aspect of the present disclosure, in the detection control that detects the outside, the scanning unit forms the optical paths with overlapping the footprints between the projected and reflected beams in the housing unit that divides the outside and the inside between the optical unit and the outside. In the optical unit in the housing unit, the light emitting unit, which emits the projected beam, and the light receiving unit, which receives the reflected beam, can be located as close as possible, thus enabling the overall size of the optical sensor to be reduced.

Moreover, according to an aspect of the present disclosure, in the monitoring control that monitors the optical property of the optical unit, the scanning unit is placed outside the footprints of the optical paths in the detection control in the housing unit and given the reflective property, between the reflective portion of the housing unit and the optical unit. As a result, the projected beam in the monitoring control is kept inside the housing unit, out of the optical path paths toward the outside in the detection control, thereby reducing unnecessary leakage of the projected beam.

### BRIEF DESCRIPTION OF DRAWINGS

FIG. 1 is a schematic diagram illustrating an overall configuration of an optical sensor according to a first embodiment in cross-section.
FIG. 2 is a schematic diagram illustrating an overall configuration of the optical sensor according to the first embodiment in cross-section.
FIG. 3 is a schematic diagram of a light emitting unit according to the first embodiment.
FIG. 4 is a schematic diagram of a light receiving unit according to the first embodiment.
FIG. 5 is a perspective view illustrating a detailed configuration of the optical sensor according to the first embodiment.
FIG. 6 is a schematic diagram illustrating monitoring control of the optical sensor according to the first embodiment in cross-section.
FIG. 7 is a schematic diagram illustrating detailed functions of the optical sensor according to the first embodiment.
FIG. 8 is an enlarged schematic diagram illustrating a detailed structure of the optical sensor according to a second embodiment.
FIG. 9 is a schematic diagram illustrating detailed functions of the optical sensor according to the second embodiment.

### DETAILED DESCRIPTION

Hereinafter, embodiments of the present disclosure will be described with reference to the drawings. It should be noted that the same reference numerals are assigned to corresponding components in the respective embodiments, and overlapping descriptions may be omitted. When only a part of the configuration is described in the respective embodiments, the configuration of the other embodiments described before may be applied to other parts of the configuration. Further, not only the combinations of the configurations explicitly shown in the description of the respective embodiments, but also the configurations of the plurality of embodiments can be partially combined together even if the configurations are not explicitly shown if there is no difficulty in the combination in particular.

### First Embodiment

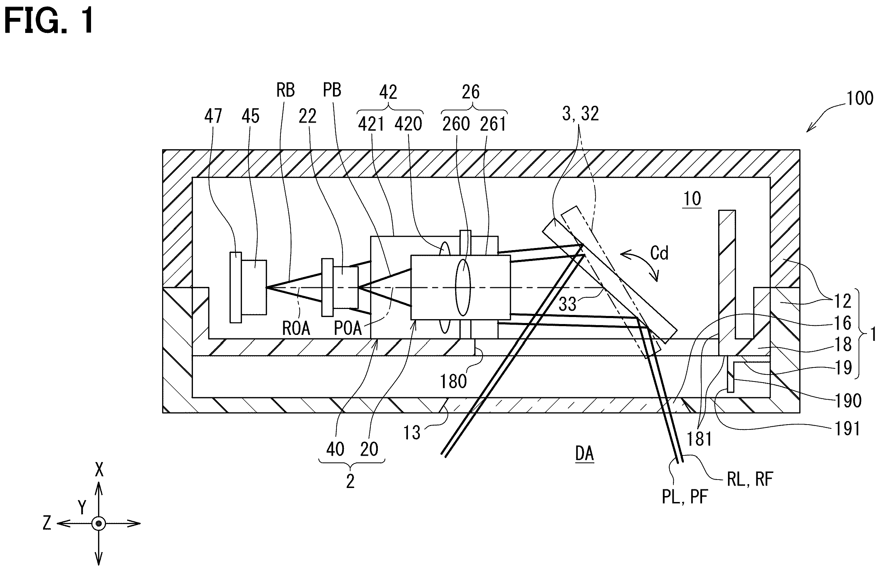

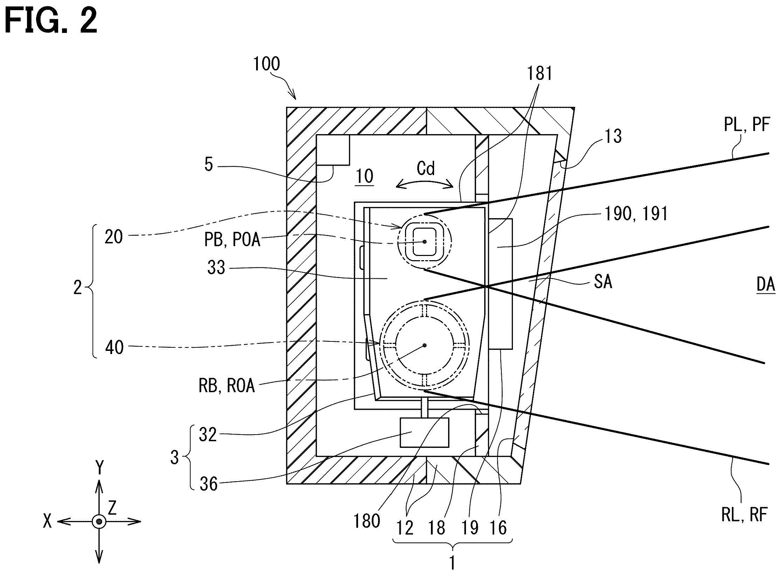

As shown in FIGS. 1, 2, an optical sensor 100 according to a first embodiment of the present disclosure is LiDAR (Light Detection and Ranging/Laser Imaging Detection and Ranging) which optically observing an outside of a moving object. The moving object to which the optical sensor 100 is to be placed is a vehicle, such as a car, which is capable of at least one of the following types of operation: manual operation, automated driving, and remote operation. In the following description, unless otherwise specified, each direction indicated by a front, a rear, a top, a bottom, a left, and a right is defined with respect to the vehicle on a horizontal plane. In the following description, a horizontal direction and a vertical direction mean, respectively, parallel and perpendicular directions to the horizontal plane in the vehicle on the horizontal plane.

The optical sensor 100 is disposed in at least one of a front portion, left and right side portions, a rear portion, and an upper roof of the vehicle. The optical sensor 100 scans a projected beam PB toward a detection area DA corresponding to a location in the vehicle among an outside world. The optical sensor 100 detects a return light that is returned when the projected beam PB is reflected by an object in the detection area DA in the outside world, as a reflected beam RB. Light in the near-infrared region, which is difficult for people to see, is normally selected as the projected beam PB, which becomes the reflected beam RB.

The optical sensor 100 detects an object in the detection area DA out of the outside world by receiving the reflected beam RB that is reflected against the projected beam PB. Such detection of external objects is, for example, one or more types of detection including at least distance from the optical sensor 100 to the object, a direction in which the object is located, and intensity of the reflected beam RB from the object. A typical observation target to be observed by the optical sensor 100 applied to the vehicle may be at least one type of moving object such as a pedestrian, a cyclist, an animal other than a human, or another vehicle. The typical target to be observed by the optical sensor 100 applied to the vehicle is at least one type of stationary object such as a guardrail, a road sign, a structure on a road side, or a fallen object on a road.

The optical sensor 100 has a three-dimensional coordinate system defined by an X, Y, and Z axes, which are three mutually orthogonal axes. In particular, in the three-dimensional coordinate system of the optical sensor 100, a Y-axis direction as a reference direction is defined along the vertical direction of the vehicle, and X-axis and Z-axis directions are defined along different horizontal directions of the vehicle, respectively. This means that for a vehicle on the horizontal plane, the XY and YZ planes of the three-dimensional coordinate system are aligned with the vertical plane perpendicular to the horizontal plane, and the XZ plane is aligned with the horizontal plane.

The optical sensor 100 has a housing unit 1, an optical unit 2, a scanning unit 3, and a control unit 5. The housing unit 1, which divides the outside world from an inside, has a housing body 12 and a translucent window 16 to form a housing chamber 10 within which other units 2, 3, 5 in the optical sensor 100 are housed.

The housing body 12 is mainly made of base materials, such as metal or synthetic resin, and is formed in a box shape surrounding the housing chamber 10. The housing body 12 has an optical aperture 13 that opens toward the X-axis direction. At least one of an exterior surface and an interior surface of the housing body 12 is provided with a light-shielding property by settings a low transmittance rate and a high absorptance rate as an optical property for light in the near-infrared region and the visible region.

The translucent window 16 is mainly made of a base material, such as resin or glass, and is formed as a flat plate facing the housing chamber 10. The translucent window 16 closes the optical aperture 13 by being enclosed and held from a periphery by the housing body 12. The translucent window 16 is provided with a light-transmitting property by setting high transmittance rate, low absorbance, and low absorptance rate as optical characteristics for light in the near-infrared region. The translucent window 16 thus exhibits translucent characteristics between the outside world and the inside of the housing unit 1 so that the projected beam PB is transmitted from the housing chamber 10 to the detection area DA and the reflected beam RB is transmitted from the detection area DA to the housing chamber 10.

The optical unit 2 includes a light emitting unit 20 and a light receiving unit 40. Hereinafter, in order to facilitate understanding of the explanation, the light emitting unit 20 is explained first, and the light receiving unit 40 is explained after the scanning unit 3.

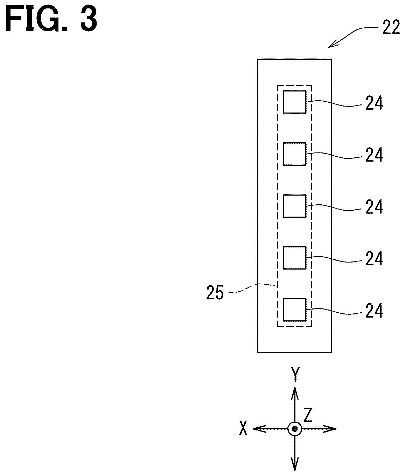

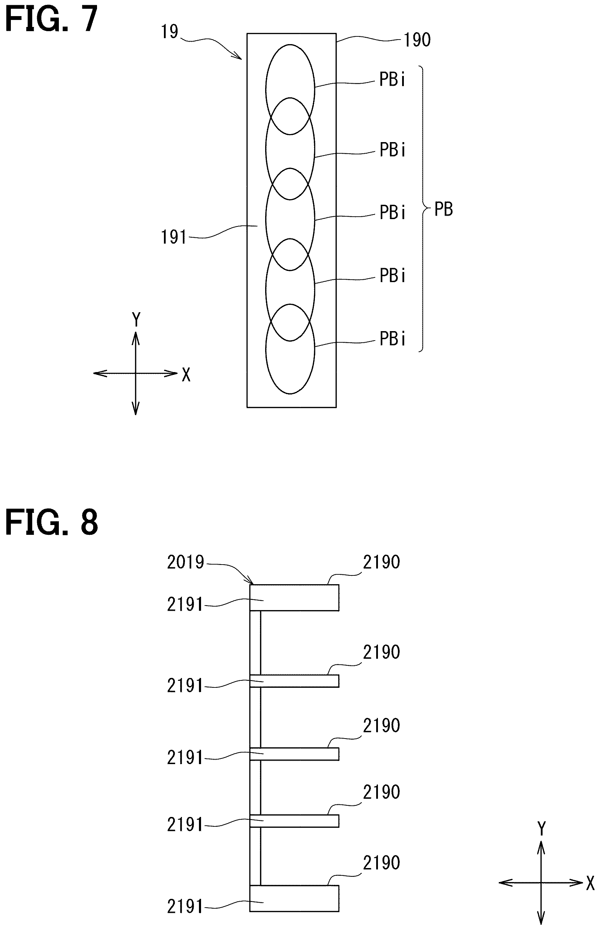

The light emitting unit 20 has a light source module 22 and a projection lens module 26, as shown in FIG. 1. As shown in FIG. 3, the light source module 22 is constructed by mounting projection light sources 24 in an array on a substrate held by the housing unit 1. In particular, each of the projection light sources 24 of the present embodiment is a laser diode, arranged in a single row, spaced apart from each other along the Y-axis direction. Each of the projection light sources 24 generates a pulsed individual beam PBi (see FIG. 7 below) of laser light that becomes part of the projected beam PB, respectively, by following a control signal from the control unit 5. Each projection light source 24 may be an edge-emitter laser or a vertical cavity surface emitting laser (VCSEL).

The light source module 22 has a light source window 25 on one side of the substrate, which is quasi-defined by a rectangular contour with the Y-axis direction as a longitudinal direction and the X-axis direction as a shortitudinal direction. The light source window 25 is configured as a collection of laser oscillation apertures in each projection light source 24. The individual beams PBi (see FIG. 7 below) projected from the laser oscillation apertures of each projection light source 24 are projected through the light source window 25 as the projected beam PB that is shaped into a long line beam along the vertical direction at least in the detection area DA of the external world.

As shown in FIG. 1, the projection lens module 26 is constructed with at least one projection lens 260 held by the housing unit 1 via a lens barrel 261. At least one light projection lens 260 is mainly made of a light-transmitting base material such as resin or glass, and is formed into a lens shape according to the optical effect to be exerted. The projection lens 260 exerts at least one type of optical action, such as focusing, collimating, and shaping, on the projected beam PB from the light source module 22. The projection lens 260 is positioned in the lens barrel 261 with a light-shielding property, formed, for example, of metal or resin.

The projection lens module 26 in such a configuration is misaligned in the Z-axis with the light source module 22 to form a projection optical axis POA in the housing chamber 10 in the housing unit 1 as shown in FIGS. 1, 2. In the housing chamber 10, the projected beam PB projected from the light source module 22 is projected along the projection optical axis POA to the scanning unit 3, which is the external side, by the optical action from the projection lens module 26.

The scanning unit 3 includes a scanning mirror 32 and a scanning motor 36. In the housing chamber 10 in the housing unit 1, the scanning mirror 32 is displaced in the Z-axis direction from the optical unit 2 and in the X-axis direction from the translucent window 16. The scanning mirror 32 is formed into a plate shape by vapor deposition of a reflective film on a mirror surface 33, which is one side of a base material. The scanning mirror 32 is supported by the housing unit 1, which is capable of rotating freely around a center line of rotation along the Y-axis direction. The scanning mirror 32 is capable of swinging within a driving range limited by a mechanical or electrical stopper.

The scanning motor 36 is placed around the scanning mirror 32 within the housing chamber 10. The scanning motor 36 is, for example, a voice coil motor, a DC motor with brushes, a stepping motor, or the like. An output shaft of the scanning motor 36 is coupled to the scanning mirror 32 directly or indirectly via a drive mechanism such as a speed reducer. The scanning motor 36 is held by the housing unit 1, which together with the output shaft is capable of rotating and driving the scanning mirror 32. The scanning motor 36 rotates or swings the scanning mirror 32 within a driving range according to a control signal from the control unit 5.

The scanning mirror 32 reflects the projected beam PB projected from the projection lens module 26 of the light emitting unit 20 in the housing chamber 10 toward the translucent window 16 by means of the mirror surface 33 depending on a rotation angle of the scanning motor 36. The scanning mirror 32 thereby scans the projected beam PB that passes through the translucent window 16 toward the detection area DA in the outside world. The scanning by the projected beam PB to the detection area DA is substantially limited to scanning in the horizontal direction in the present embodiment, according to the rotational drive of the scanning mirror 32.

The scanning mirror 32 reflects the reflected beam RB that enters through the translucent window 16 from the external detection area DA in the housing chamber 10 toward the light receiving unit 40 by means of the mirror surface 33 in accordance with the rotation angle of the scanning motor 36. Speeds of the projected beam PB and the reflected beam RB are sufficiently large relative to the rotational speed of the scanning mirror 32. The reflected beam RB is then guided to the light receiving unit 40 in a retrograde direction from the projected beam PB by reflection action from the scanning mirror 32, whose angle to the projected beam PB can be mimicked to be substantially the same rotation angle.

The light receiving unit 40 is positioned in the Y-axis direction relative to the light emitting unit 20, and thus constitutes the optical unit 2 jointly with the light emitting unit 20, which is displaced in the Z-axis direction from the scanning mirror 32. The light receiving unit 40 has a light-receiving lens module 42 and a light-receiving detection module 45, as shown in FIG. 1. The light-receiving lens module 42 is built in a structure in which at least one light-receiving lens 420 is held by the housing unit 1 via a lens barrel 421. At least one light-receiving lens 420 is mainly made of a light-transmitting base material such as resin or glass, and is formed into a lens shape according to the optical effect to be exerted. The light-receiving lens 420 exerts an optical action so that the reflected beam RB from the scanning mirror 32 is formed into an image to the light-receiving detection module 45. The light-receiving lens 420 is positioned in the lens barrel 421 with a light-shielding property, formed, for example, of metal or resin.

The light-receiving lens module 42 is misaligned in the Z-axis direction with the light-receiving detection module 45 to form a light-receiving axis ROA in the housing chamber 10 in the housing unit 1 as shown in FIGS. 1, 2. The light-receiving optical axis ROA of the light-receiving lens module 42 is displaced in the Y-axis direction relative to the projection optical axis POA of the projection lens module 26. As a result, the reflected beam RB, which is reflected from the mirror surface 33 of the scanning mirror 32 and is displaced in the Y-axis direction from the projected beam PB, is guided along the light-receiving axis ROA by optical action from the light-receiving lens module 42. The reflected beam RB is thereby received by the light-receiving detection module 45 in the housing chamber 10.

A footprint PF of an optical path PL formed by the projected beam PB and a footprint RF of an optical path RL formed by the reflected beam RB form an overlapping area SA that partially overlaps in the Y-axis direction over a driving range of the scanning mirror 32 in the housing chamber 10. Here, the footprints PF, RF of the projected beam PB and the reflected beam RB are designed to partially overlap each other on at least one of sides of the housing chamber 10 and the exterior world of the translucent window 16. The translucent window 16 is thereby located within the footprint PF, RF of each optical path PL, RL in the housing chamber 10 and exhibits translucent characteristics between the outside world and the housing chamber 10 for each beam PB, RB. In the above, the footprints PF, RF refer to spatial areas where the optical paths PL, RL, which are the trajectories of beams PB, RB, respectively, in detection control Cd described below, can be formed over the driving range of the scanning mirror 32.

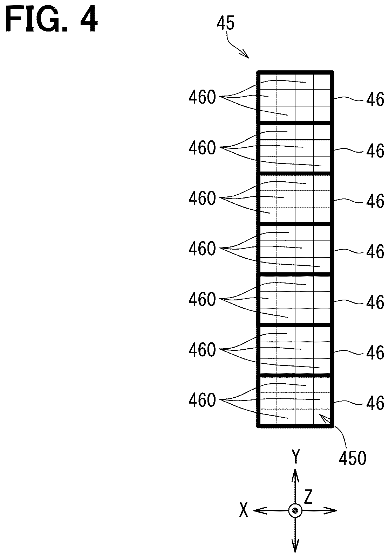

As shown in FIG. 4, the light-receiving detection module 45 is constructed by mounting light-receiving pixels 46 in an array on the substrate held by the housing unit 1. Each of the light-receiving pixels 46 is arranged along at least the Y-axis direction. The light-receiving detection module 45 has a light-receiving surface 450 with a rectangular contour, with the Y-axis direction being a longitudinal direction and the X-axis direction being a shortitudinal direction, on one side of the substrate. The light-receiving surface 450 is configured as a collection of incident surfaces of each light-receiving pixel 46. Each light-receiving pixel 46 is further formed from, for example, a single photon avalanche diode (Single Photon Avalanche Diode) as light receiving elements 460 each. Each such light-receiving pixel 46 receives the reflected beam RB incident from the light-receiving lens module 42 to the light-receiving surface 450 as a line beam spread along the Y-axis direction.

As shown in FIG. 1, the light-receiving detection module 45 has an output circuit 47. The output circuit 47 performs sampling processing at each control cycle according to the control signal from the control unit 5 in a detection frame for each scanning line corresponding to the rotation angle of the scanning mirror 32, synchronized with a projection cycle of the projected beam PB by the light source module 22. The output circuit 47 generates a detection signal by synthesizing the response output from the light receiving element 460 of each light-receiving pixel 46 at each control cycle. The detection signal thus generated is output from the output circuit 47 to the control unit 5 by each scanning line.

The control unit 5 shown in FIG. 2 is mainly includes at least one of a computer including a processor and memory. The control unit 5 is connected to the light source module 22, the scanning motor 36, and the light-receiving detection module 45. The control unit 5 controls the light source module 22 of the optical unit 2 to generate the projected beam PB in each projection cycle. The control unit 5 also controls the scanning motor 36 to control scanning and reflection by the scanning mirror 32 synchronized with the projection cycle by the light source module 22. Furthermore, the control unit 5 processes the detection signals output from the light-receiving detection module 45 of the optical unit 2 in accordance with the light projection cycle by the light source module 22 and the scanning and the reflection by the scanning mirror 32.

In the detection control Cd that detects objects in the detection area DA in the outside world as shown in FIGS. 1, 2, the control unit 5 generates three-dimensional point group data as object detection data through detection signal processing from the light-receiving detection module 45. The detection control Cd is performed as the scanning unit 3 forms each optical path PL, RL with overlapping footprints PF, RF of each beam PB, RB in the housing chamber 10 in the housing unit 1, between the optical unit 2 and the outside world.

### Detailed Structure and Detailed Functions

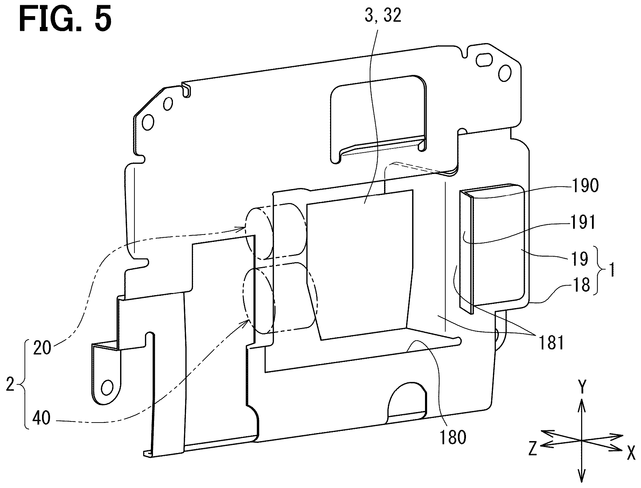

Next, the detailed structure and the detailed functions of the optical sensor 100 are described. As shown in FIGS. 1, 2, 5, and 6, the housing unit 1 further has a frame member 18 and a reflective member 19.

The frame member 18 is mainly made of a base material, such as metal or synthetic resin, and is formed in a form of a partition wall that bisects the housing chamber 10 in the X-axis direction. The frame member 18 is surrounded and held from a periphery by the housing body 12, and is positioned with the translucent window 16 facing one side in the X-axis direction. Both surfaces of the frame member 18 are given a light-shielding property by setting low transmittance, low reflectance, and high absorptance as an optical property for light in the near-infrared and visible regions.

In the housing chamber 10 in the housing unit 1, the frame member 18 holds the parts 20, 40 and the scanning motor 36 of the optical unit 2 on the opposite side of the translucent window 16 in the X-axis direction. The frame member 18 has a scanning aperture 180 that penetrates between both sides. The frame member 18 encloses the footprints PF, RF of the optical paths PL, RL formed by the respective beams PB, RB in the housing chamber 10 from a periphery by the scanning aperture 180.

On one side of the scanning aperture 180 in the Z-axis direction, the frame member 18 is bent along each of the YZ and XY planes, so that a light-shielding portion 181 around a reflective portion 190, described below in particular, is formed with light-shielding characteristics for each beam PB, RB. In the housing chamber 10, the light-shielding portion 181 is thereby arranged in an area outside the footprints PF, RF of each optical path PL, RL in the detection control Cd, which is opposite the optical unit 2 with the scanning unit 3 in the Z-axis direction.

The reflective member 19 is formed of a base material, such as metal or synthetic resin, in a form of a bent plate. The reflective member 19 is held at the light-shielding portion 181 of the frame member 18, on the side of the translucent window 16 along the YZ plane. In the housing chamber 10, the reflective member 19 is thereby arranged in an area outside the footprints PF, RF of each optical path PL, RL in the detection control Cd, which is opposite the optical unit 2 with the scanning unit 3 in the Z-axis direction. In the housing chamber 10, the translucent window 16 is provided within the footprints PF, RF of each light path PL, RL in the detection control Cd, avoiding an area where these reflective members 19 are placed.

The reflective member 19 forms the reflective portion 190 with the light-shielding portion 181 spread around the perimeter, which is on the side of each unit 3, 2 in the Z-axis direction, by means of a bending portion spread along the YZ-plane and the XY-plane. The reflective portion 190 has a reflective surface 191 that is longitudinal in the Y-axis direction as a reference direction, constructed by a surface of this bent portion that faces the respective units 3, 2 in the Z-axis direction along the YZ plane. The reflective surface 191 is given a reflective property by setting low transmittance, low absorptance, and high diffuse reflectance as an optical property for light in the near-infrared region. The diffuse reflectance of the reflective surface 191 represents the optical property of diffuse reflection of light (in this case, the projected beam PB) due to the unevenness of the surface of the reflective portion 190. The reflective surface 191 is therefore formed, for example, as an even diffuse reflective surface.

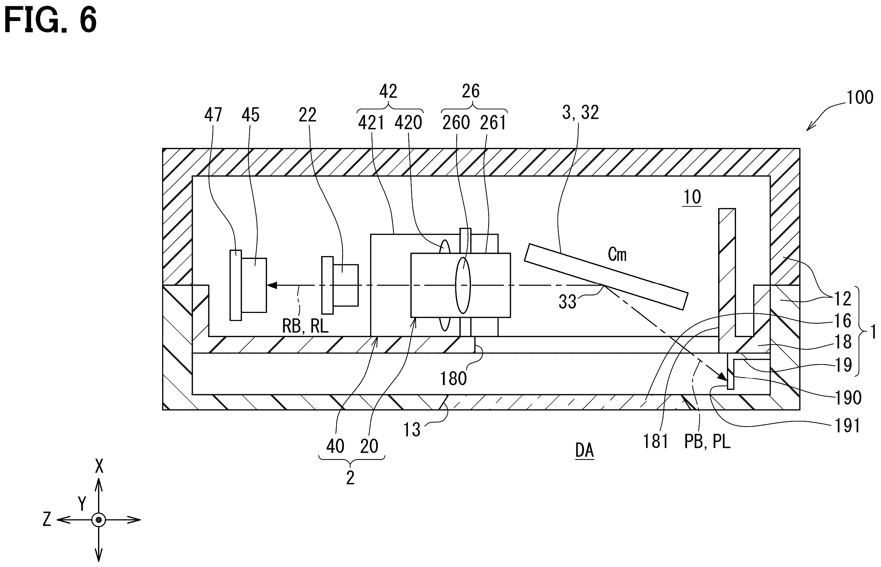

In accordance with this detailed structure, the control unit 5 is configured to execute the monitoring control Cm as a detailed function different from the detection control Cd during a period when the detection control Cd in FIGS. 1, 2 is not executed, for example, when the optical sensor 100 is started up, as shown in FIG. 6. In the monitoring control Cm, the optical characteristics of a monitored object, which is at least one of the parts 20, 40 of the optical sensor 100, are monitored, for example, the light intensity variation of the projected beam PB or the light intensity variation of the reflected beam RB due to an abnormality, failure, or aging deterioration.

The monitoring control Cm is performed in response to the scanning unit 3 forming each optical path PL, RL between the reflective portion 190 located outside the footprints PF, RF of each optical path PL, RL in the detection control Cd and the optical unit 2 in the housing chamber 10 in the housing unit 1. In this case, among the reflected beam RB generated by the diffuse reflection of the projected beam PB by the reflective surface 191 of the reflective portion 190, some beam components reach the light-receiving surface 450 of the light-receiving detection module 45, forming each optical path PL, RL between the reflective portion 190 and the optical unit 2 as shown in FIG. 6. As a result, the beam component that reaches the light-receiving surface 450 as the reflected beam RB is received by the light-receiving detection module 45 with a set intensity that is lower than the original projected beam PB to an extent that the optical characteristics of the object can be monitored. As for the reflected beam RB generated by diffuse reflection by the reflective surface 191 of the reflective portion 190, the arrival of the beam component to the translucent window 16 itself and the intensity of the beam component that leaks to the outside world as a result of such arrival are suppressed.

In the monitoring control Cm, the characteristic data representing the optical characteristics of the monitored object is generated by the control unit 5 based on the detection signal received from the reflected beam RB reflected by the reflective portion 190, which has the reflective surface 191 with the reflective property that is virtually invariant to the projected beam PB. In the housing chamber 10, as shown in FIG. 7, the collective beams of the individual beams PBi that are partially superimposed in the Y-axis direction in a placement area of the reflective portion 190 are reflected by the long reflective surface 191 in the Y-axis direction as the projected beam PB.

### Actions and Effects

The actions and effects of the first embodiment described above are described below.

According to the first embodiment, in the detection control Cd that detects the outside world, the scanning unit 3 forms each optical path PL, RL overlapping between footprints PF, RF with the projected beam PB and the reflected beam RB in the housing unit 1 that divides the outside world and the inside between the optical unit 2 and the outside world. In the optical unit 2 in the housing unit 1, the light emitting unit 20, which emits the projected beam PB, and the light receiving unit 40, which receives the reflected beam RB, can be located as close as possible, thus enabling the overall size of the optical sensor 100 to be reduced.

Moreover, according to the first embodiment, in the monitoring control Cm, which monitors the optical characteristics of the optical unit 2, the scanning unit 3 forms each optical path PL, RL between the reflective portion 190 and the optical unit 2. The reflective portion 190 is located outside the footprints PF, RF of the respective optical paths PL, RL of the detection control Cd in the housing unit 1 and has reflective characteristics. As a result, the projected beam PB in the monitoring control Cm is kept inside the housing unit 1, out of the light paths PL, RL toward the outside world in the detection control Cd, thereby reducing unnecessary leakage of the projected beam PB.

The reflective portion 190 according to the first embodiment is given reflective characteristics on the reflective surface 191 that diffusely reflects the projected beam PB. According to this, even the reflected beam RB, which is generated by the reflective portion 190 closer to the light receiving unit 40 than the outside world, can be received by the light receiving unit 40 with less intensity than the projected beam PB. Therefore, the monitoring accuracy of the optical characteristics in the monitoring control Cm can be reduced from deterioration due to saturation of the intensity of the reflected beam RB received at the light receiving unit 40.

The light emitting unit 20 according to the first embodiment projects a line-beam-like projected beam PB, which is longitudinal along the Y-axis direction as the reference direction, at least in the outside world. The reflective portion 190 according to the first embodiment can be formed small to the minimum size necessary to match the shape of the projected beam PB, since the reflective property are given to the long reflective surface 191 along the Y-axis direction along which the projected beam PB is aligned. This enables the optical sensor 100 to be miniaturized.

The reflective portion 190 according to the first embodiment is located in the frame member 18 that holds the optical unit 2 and the scanning unit 3 in the housing unit 1, in an area opposite to the optical unit 2 across the scanning unit 3. This makes it possible to make effective use of the frame member 18 forming the housing unit 1 and to position the reflective portion 190 as close as possible to the optical unit 2, thereby enabling the optical sensor 100 to be miniaturized.

The light-shielding portion 181 of the housing unit 1 according to the first embodiment is given light-shielding characteristics around the reflective portion 190 outside the footprints PF, RF of each light path PL, RL in the detection control Cd in the housing unit 1. According to this, even if at least one of the beams PB, RB strays outside the respective light paths PL, RL in the detection control Cd due to, for example, scattering, it can be prevented from reaching the reflective portion 190 by the light-shielding portion 181. Therefore, beam leakage to the outside world and degradation of the accuracy of outside world detection due to unwanted reflections at the reflective portion 190 can be reduced.

Within the housing unit 1 according to the first embodiment, the translucent window 16 of the housing unit 1, which provides translucent characteristics for both beams PB, RB to the outside world, is provided within the footprints PF, RF of each light path PL, RL in the detection control Cd, avoiding an area where the reflective portion 190 is located. As a result, the monitoring control Cm can reduce a situation in which the reflected beam RB reflected by the reflective portion 190, which is located outside the footprints PF, RF of each optical path PL, RL in the detection control Cd, leaks out to the outside world the translucent window 16 in the footprints PF, RF.

In the first embodiment, each beam PB, RB that passes through the translucent window 16 in the footprint PF, RF in the detection control Cd can be deterred from reaching the reflective portion 190 outside those footprints PF, RF. As a result, the leakage of the beam to the outside world and the degradation of the accuracy of the detection of the outside world due to the unwanted reflections at the reflective portion 190 can be reduced. Moreover, according to the first embodiment, the arrival of the reflected beam RB diffusely reflected by the reflective portion 190 outside the footprint PF, RF and the intensity of the beam component leaking to the outside where such arrival has occurred can be reduced at the translucent window 16 which transmits each beam PB, RB into the footprint PF, RF in the detection control Cd. Therefore, the beam leakage to the outside world due to diffuse reflection can also be reduced.

### Second Embodiment

A second embodiment shown in FIG. 8 is a modification of the first embodiment. The reflective member 2019 of the second embodiment has reflective portions 2190 in a form of protrusions, which are mutually spaced apart along the Y-axis direction as the reference direction. Each reflective portion 2190 is constructed of individual reflective surfaces 2191 by sloping surfaces that face the opposite side of the translucent window 16 in the X-axis direction along an acute angle direction α to the YZ and XY planes. The individual reflective surfaces 2191 of each of these reflective portions 2190 are given reflective characteristics by setting low transmittance, low absorptance, and high diffuse reflectance as optical characteristics for light in the near infrared region, as in the first embodiment.

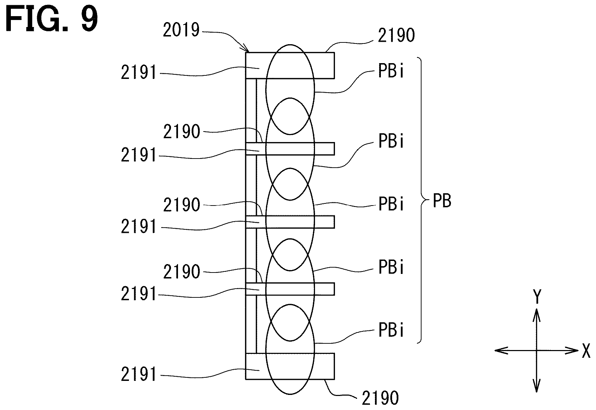

In the monitoring control Cm of the second embodiment according to such a detailed structure, a corresponding beam PBi is reflected for each mutually separated reflective surface 2191, which is given reflective characteristics for the individual beam PBi from the corresponding projection light source 24 respectively in each reflective portion 2190 as shown in FIG. 9. Each individual beam PBi is separated and diffusely reflected by the reflective surfaces 2191, which are mutually separated from each other avoiding the mutual superposition in the Y-axis direction between adjacent individual beams PBi in a placement area of each reflective portion 2190. Therefore, in the monitoring control Cm, which receives the separated reflected beams RB corresponding to the individual beams PBi respectively, characteristic data is generated by the control unit 5 to represent the optical characteristics for each of the separate projection light sources 24 to be monitored.

In the second embodiment described above, as in the first embodiment, the light emitting unit 20, as in the first embodiment, projects a line-beam-like projected beam PB that is long along the Y-axis direction, at least in the outside world, by a collection of the individual beams PBi from the projection light sources 24 that are spaced and arranged along the Y-axis direction as the reference direction. Therefore, in the second embodiment, the reflective portions 2190, which are arranged in a spaced array along the Y-axis direction, are each given reflective characteristics for the individual beams PBi from the corresponding projection light source 24. This allows the monitoring control Cm to receive the reflected beam RB from the reflective portion 2190 for each individual beam PBi from each projection light source 24 that becomes the projected beam PB, and to monitor the optical characteristics of each of those projection light sources 24 individually. Therefore, the accuracy of the monitoring optical characteristics, especially for the light emitting unit 20 can be improved.

In the second embodiment, the light emitting unit 20 also projects a line-beam-like projected beam PB that is long along the Y-axis direction by aggregating individual beams PBi that are superimposed in the Y-axis direction in the area where the reflective portion 2190 is located. According to this, in order to monitor the optical characteristics of each projection light source 24 individually by the monitoring control Cm, the reflective portions 2190, which reflect the reflected beam RB for each individual beam PBi from each projection light source 24 that becomes the projected beam PB, can be arranged as close as possible to each other, thus enabling the optical sensor 100 to be made smaller.

### Other Embodiments

Although a plurality of embodiments have been described above, the present disclosure is not to be construed as being limited to these embodiments, and can be applied to various embodiments and combinations within a scope not deviating from the gist of the present disclosure.

In a modification, a Y-axis direction along the horizontal direction and an X-axis direction along the vertical direction may be defined. In a modification, the reflective portions 190, 2910 may be provided outside the footprints PF, RF of each optical path PL, RL at the detection control Cd in the housing unit 1 other than the frame member 18 holding the optical unit 2 and the scanning unit 3, for example in the housing body 12. In a modification, the light-shielding portion 181 may not be provided around the reflective portions 190, 2910. In a modification, the reflective portions 190, 2190 may be given positive reflection characteristics instead of diffuse reflection characteristics by forming reflective surfaces 191, 2191, such as inclined along an acute angle to the YZ and XY planes and facing the opposite side of the translucent window 16 in the X axis direction.

A moving object to which the optical sensor 100 is applied in a modification may be, for example, an autonomous robot that can transport luggage or collect information by autonomous or remote driving. In a modification, the optical sensor 100 may be applied to objects other than moving objects, such as stationary structures.

### Additional remarks

The present specification discloses a plurality of technical ideas listed below and a plurality of combinations thereof.

### Technical Idea 1

An optical sensor (100) receives a reflected beam (RB) that is reflected in response to a projected beam (PB). The optical sensor includes a housing unit (1) that separates an outside from an inside. The optical sensor also has an optical unit (2) that includes a light emitting unit (20) to emit the projected beam in the housing unit and a light receiving unit (40) to receive the reflected beam in the housing unit. A scanning unit (3) scans the projected beam emitted by the light emitting unit toward the outside within the housing unit and reflects the reflected beam from the outside toward the light receiving unit within the housing unit. A control unit (5) controls the optical unit and the scanning unit. The housing unit includes a reflective portion (190, 2190) that has a reflective property for the projected beam. The control unit controls the scanning unit to perform detection control (Cd). This detection control forms optical paths (PL, RL) in the housing unit where footprints (PF, RF) of the projected beam and the reflected beam overlap, between the optical unit and the outside, to detect the outside. The control unit also performs monitoring control (Cm). This monitoring control forms optical paths between the optical unit and the reflective portion, which is located within the housing unit and outside the footprints of the optical paths in the detection control. The monitoring control monitors an optical property of the optical unit.

### Technical Idea 2

The optical sensor according to technical idea 1, wherein a reflective surface (191, 2191) of the reflective portion has the reflective property of diffusely reflecting the projected beam.

### Technical Idea 3

The optical sensor according to technical Idea 1 or 2, wherein the light emitting unit is configured to emit the projected beam as a line beam along a reference direction (Y) at least in the outside. A reflective surface (191) of the reflective portion (190) has the reflective property and has an elongated shape along the reference direction.

### Technical Idea 4

The optical sensor according to technical Idea 1 or 2, wherein the light emitting unit has light sources (24) arranged in a spaced array along a reference direction (Y). The light emitting unit is configured to emit the projected beam as is a line beam along the reference direction at least in the outside by combining individual beams (PBi) from the light sources. The reflective portion is one of reflective portions (2190) arranged in a spaced array along the reference direction. The reflective portions have reflective properties respectively for the individual beams from the corresponding the light sources.

### Technical Idea 5

The optical sensor according to technical Idea 4, wherein the light emitting unit is configured to emit the projected beam as a line beam along the reference direction by combining the individual beams (PBi) that are superimposed in the reference direction in an area where the reflective portion is located.

### Technical Idea 6

The optical sensor according to any one of technical Ideas 1 to 5, wherein the optical unit and the scanning unit are held by a frame member (18) in the housing unit. The reflective portion is arranged in an area opposite to the optical unit in the frame member, with the scanning unit sandwiched between the optical unit and the reflective portion.

### Technical Idea 7

The optical sensor according to any one of technical Ideas 1 to 6, wherein the housing unit has a light-shielding portion (181) having a light shielding property for the projected beam and the reflected beam. The light-shielding portion is provided around the reflective portion in an area where there is no footprint of the optical paths in the housing unit for the detection control.

### Technical Idea 8

The optical sensor according to any one of technical Ideas 1 to 7, wherein the housing unit has a translucent window (16) having a translucent property for the projected beam and the reflected beam between the outside and the inside of the housing unit. The translucent window is provided in the footprints of the optical paths in the housing unit for the detection control, avoiding an area where the reflective portion is located.

## Claims

1. An optical sensor configured to receive a reflected beam (RB) that is reflected in response to a projected beam (PB), the optical sensor comprising:
a housing unit (1) separating an outside from an inside;
an optical unit (2) including a light emitting unit (20) configured to emit the projected beam in the housing unit and a light receiving unit (40) configured to receive the reflected beam in the housing unit;
a scanning unit (3) configured to scan the projected beam emitted by the light emitting unit toward the outside within the housing unit, and to reflect the reflected beam from the outside toward the light receiving unit within the housing unit; and
a control unit (5) configured to control the optical unit and the scanning unit, wherein
the housing unit includes a reflective portion (190, 2190) having a reflective property for the projected beam,
the control unit is configured to control the scanning unit to perform:
a detection control (Cd) to form optical paths (PL, RL) in the housing unit where footprints (PF, RF) of the projected beam and the reflected beam overlap, between the optical unit and the outside, and to detect the outside; and
a monitoring control (Cm) to form optical paths between the optical unit and the reflective portion, which is located within the housing unit and located outside the footprints of the optical paths in the detection control, and the optical unit, and to monitor an optical property of the optical unit.

2. The optical sensor according to claim 1, wherein
a reflective surface (191, 2191) of the reflective portion has the reflective property of diffusely reflecting the projected beam.

3. The optical sensor according to claim 1, wherein
the light emitting unit is configured to emit the projected beam as a line beam along a reference direction (Y) at least in the outside, and
a reflective surface (191) of the reflective portion (190) has the reflective property and has an elongated shape along the reference direction.

4. The optical sensor according to claim 1, wherein
the light emitting unit has light sources (24) arranged in a spaced array along a reference direction (Y),
the light emitting unit is configured to emit the projected beam as is a line beam along the reference direction at least in the outside by combining individual beams (PBi) from the light sources,
the reflective portion is one of reflective portions (2190) arranged in a spaced array along the reference direction, and
the reflective portions have reflective properties respectively for the individual beams from the corresponding the light sources.

5. The optical sensor according to claim 4, wherein
the light emitting unit is configured to emit the projected beam as a line beam along the reference direction by combining the individual beams (PBi) that are superimposed in the reference direction in an area where the reflective portion is located.

6. The optical sensor according to any one of claims 1 to 5, wherein
the optical unit and the scanning unit are held by a frame member (18) in the housing unit, and
the reflective portion is arranged in an area opposite to the optical unit in the frame member, with the scanning unit sandwiched between the optical unit and the reflective portion.

7. The optical sensor according to any one of claims 1 to 5, wherein
the housing unit has a light-shielding portion (181) having a light shielding property for the projected beam and the reflected beam, and
the light-shielding portion is provided around the reflective portion in an area where there is no footprint of the optical paths in the housing unit for the detection control.

8. The optical sensor according to any one of claims 1 to 5, wherein
the housing unit has a translucent window (16) having a translucent property for the projected beam and the reflected beam between the outside and the inside of the housing unit, and
the translucent window is provided in the footprints of the optical paths in the housing unit for the detection control, avoiding an area where the reflective portion is located.
